# EUROPÄISCHE PATENTSCHRIFT

(11) **EP 3 465 079 B1**
(45) Veröffentlichungstag und Bekanntmachung des Hinweises auf die Patenterteilung: **23.10.2019**
(21) Anmeldenummer: 17731485.3
(22) Anmeldetag: 02.06.2017
(51) Int. Cl.: G01B 11/24, G01B 11/245, B25J 19/02

(54) **VORRICHTUNG ZUR MESSUNG EINES GEWINDES**
APPARATUS FOR MEASURING A THREAD
DISPOSITIF DE MESURE D'UN FILETAGE

(30) Priorität: 03.06.2016 DE 102016209762
(43) Veröffentlichungstag der Anmeldung: 10.04.2019
(73) Patentinhaber: SMS Group GmbH, 40237 Düsseldorf (DE)
(72) Erfinder: SAUERLAND, Martin, 41372 Niederkrüchten (DE); D'HONE, Frank, 51145 Köln (DE)
(74) Vertreter: Kross, Ulrich
(86) Internationale Anmeldenummer: PCT/EP2017/063481
(87) Internationale Veröffentlichungsnummer: WO 2017/207765

(56) Entgegenhaltungen:
- EP-A1- 2 259 015
- JP-A- S63 191 007
- JP-A- 2010 038 554
- US-A- 5 291 272

## Beschreibung

Die Erfindung betrifft eine Vorrichtung zur Messung eines Gewindes nach dem Oberbegriff des Anspruchs 1.

EP 2 259 015 A1 beschreibt eine Vorrichtung zur Messung eines Gewindes auf einem Rohrende, wobei sowohl eine erste, optische Messvorrichtung als auch eine zweite, mechanisch sensorische Messeinrichtung verfahrbar auf einem Tisch angeordnet sind. Die optische Messeinrichtung umfasst nur eine einzelne Messstrecke. Die Messstrecke ist linear in drei aufeinander senkrechten Raumrichtungen bewegbar und zudem um eine einzelne Kippachse, die annähernd senkrecht zu einer Rohrachse verläuft, schwenkbar.

JP-A-2010038554 beschreibt eine Vorrichtung zur Messung eines Gewindes, bei der mehrere Messstrecken an verschiedenen Positionen an einem zu vermessenden Gewinde angeordnet sind.

JP-A-S63 191007 beschreibt eine Vorrichtung zur Messung eines Gewindes, bei der eine optische Messvorrichtung mit nur einer Messstrecke an einem zu vermessenden Gewinde angeordnet ist.

US-A-5 291 272 beschreibt eine Vorrichtung zur Messung eines Gewindes, bei der eine optische Messvorrichtung zwei Messstrecken an zwei gegenüberliegenden Seiten eines zu vermessenden Gewindes angeordnet sind.

Es ist die Aufgabe der Erfindung, eine Vorrichtung zur Messung eines Gewindes anzugeben, die eine besonders genaue Qualitätskontrolle ermöglicht.

Diese Aufgabe wird für eine eingangs genannte Vorrichtung erfindungsgemäß mit den kennzeichnenden Merkmalen des Anspruchs 1 gelöst. Durch die Kombination wenigstens zweier optischer Messtrecken zu einem Messkanal kann eine gleichzeitige Vermessung des Gewindes an gegenüberliegenden Seiten des Rohres erfolgen. Hierdurch können neben der Ausbildung der Gewindegänge zugleich Positionierungsfehler, Verformungen und andere Fehler über den Gesamtdurchmesser bestimmt werden.

Insbesondere sind die zumindest zwei Messstrecken eines Messkanals dabei präzise zueinander positioniert, so dass gemessene Abweichungen bezüglich gegenüberliegender Rohrbereichen auf das Gewinde selbst rückführbar sind.

Unter einer Messstrecke ist im Sinne der Erfindung dabei jedes optische Erfassungssystem mit einem optischen Sensor verstanden, mittels dessen ein Objekt in einem Bereich optisch vermessen werden kann. Die wenigstens zwei Messtrecken erfassen somit zwei räumlich verschiedene Bereiche des Objektes. Durch eine bekannte Ausrichtung der Messstrecken zueinander ist insgesamt ein Messkanal gegeben, mittels dessen Messinformation auch über die relative Lage der beiden vermessenen Bereiche erzielt wird.

Ein Rohr mit einem Gewinde betrifft im Sinne der Erfindung bevorzugt Rohre mit Außengewinden und einem Durchmesser zwischen 20mm bis 600 mm. Solche Rohre werden zum Beispiel in der ÖI- und Gasexploration verwendet. Meist handelt es sich um hochwertige, nahtlos gewalzte Rohre, die nach dem Walzen an zumindest einem Ende mit einem aufgeschnittenen Gewinde veredelt werden. Die Anforderungen an die Genauigkeit der Gewinde solcher Rohre sind hoch. Eine übliche Norm zur Definition der Anforderungen an die Maßhaltigkeit der Gewinde ist die Norm API 5B des American Petroleum Institute.

Eine Stellachse im Sinne der Erfindung ist eine geometrische Achse. Die Stellachse kann, muss aber nicht mit einer gegenständlichen Achse zusammenfallen. Die Kippung um die Stellachse kann insbesondere auch mit einer translatorischen Bewegung überlagert erfolgen.

Ein Manipulator kann im Sinne der Erfindung die Messstrecke bzw. den Messkanal in einer oder mehreren Raumrichtungen translatorisch bewegen sowie zudem die Kippung um die Stellachse vornehmen. Die Bewegungen des Manipulators sind bevorzugt vollständig über Motoren angetrieben und über eine elektronische Steuereinheit kontrollierbar.

Eine Gewindeachse im Sinne der Erfindung ist durch die geometrische Struktur des auf das Rohrende aufgeschnittenen Gewindes als dessen zentrale Achse definiert. Die Gewindeachse kann insbesondere aufgrund von erlaubten oder auch unerlaubten Toleranzen von einer zentralen Achse des Rohres abweichen.

Erfindungsgemäß ist es vorgesehen, dass der Messkanal mittels des Manipulators um zumindest eine zweite Stellachse relativ zu der Gewindeachse kippbar ist, so dass der Messkanal innerhalb eines Raumwinkelintervalls frei ausrichtbar ist. Anders als bei vorbekannten System, bei denen eine Ausrichtung allenfalls um einen Winkel in einer einzigen Ebene erfolgt, kann somit ein bezüglich der Raumrichtung beliebiger Schiefstand der Gewindeachse in genaue Ausrichtung zu dem Messkanal gebracht werden. Der Schiefstand der Gewindeachse kann dabei auch auf verschiedene Ursachen zurückzuführen sein, zum Beispiel ein Durchhängen des Rohres, eine Abweichung von Gewindeachse und Rohrachse, eine Toleranz im Halter des Rohres oder Ähnliches. Bevorzugt kann eine Steigung des Gewindes als vorbekannte Größe in die Ausrichtung über die Stellachsen mit eingehen.

Bei einer bevorzugten Weiterbildung erfolgt eine Ausrichtung des Messkanals zur Messung des Gewindes dadurch, dass durch die Kippungen um die Stellachsen ein Extremum einer optischen Breite eines Gewindeganges eingestellt wird. Je nach Gewindeform und Anforderungen kann es sich dabei um die Maximierung der projizierten Breite eines Gewindegrundes des Gewindegangs und/oder die Minimierung der projizierten Breite einer Gewindespitze des Gewindegangs handeln. In jedem Fall ermöglicht die Messung eines Extremums eine schnelle Ausrichtung bei zugleich hoher Genauigkeit

Allgemein vorteilhaft kann der Messkanal auf einem um die Stellachsen bewegbaren Träger angeordnet sein, wobei der Träger über eine Linearführung entlang einer Hauptrichtung verfahrbar ist. Hierdurch wird auf einfache mechanische Weise sichergestellt, dass die einmal eingestellte Ausrichtung genau beibehalten wird, wenn Träger nachfolgend entlang der Hauptrichtung zur Vermessung des Gewindes bewegt wird. Eine Gewindesteigung kann als vorbekannte Größe vorteilhaft mittels einer entsprechenden Verstellmöglichkeit zwischen Träger und Messkanal vorgewählt sein.

Im Interesse eines schnellen und effizienten Vermessens des Gewindes ist es vorgesehen, dass der Messkanal in einem ersten Schritt mittels des Manipulators in eine Überdeckung mit dem Gewinde verfahren wird, wobei eine Ausrichtung des Messkanals zu der Gewindeachse erfolgt, und dass der Messkanal in einem zweiten Schritt in Gegenrichtung aus der Überdeckung herausgefahren wird, wobei eine Vermessung des Gewindes erfolgt.

Bei einer möglichen Ausführungsform ist es im Interesse einer universellen und kostengünstigen Realisierung vorgesehen, dass der Manipulator einen frei bewegbaren Industrieroboter umfasst. Unter einem Industrieroboter ist im vorliegenden Sinn jeder marktübliche, programmierbare und für universelle Aufgaben ausgelegte Manipulator zu verstehen.

Bei einer vorteilhaften Ausführungsform ist wenigstens ein zweiter Messkanal an dem Manipulator angeordnet, wobei die Messkanäle auf verschiedene Bereiche des Gewindes in seiner Umfangsrichtung ausgerichtet sind. Dies erlaubt gleichzeitig die Vermessung des Gewindes an mehreren Positionen über den Umfang verteilt, wodurch die Vermessung erheblich beschleunigt wird. Insbesondere kann bei ausreichender Anzahl von Messkanälen erreicht werden, dass weder das Rohr noch die Messapparatur um die Gewindeachse verdreht werden müssen. Nach einer solchen Drehung wäre aufgrund auftretender Toleranzen zumeist eine erneute Ausrichtung des Messkanals erforderlich.

Die Anzahl der Messkanäle kann vorteilhaft an zu erwartende Abweichungen bei der Fertigung angepasst werden. So führt zum Beispiel das Walzen des Rohres mit einem 2-Walzen-Verfahren gegebenenfalls zu einer unerwünscht großen 2-Punkt-Ovalität, die gut mit zwei um 90 Grad gedrehten Messkanälen erfasst werden kann. Das Walzen des Rohres mit einem 3-Walzen-Verfahren führt gegebenenfalls zu einer unerwünscht großen 3-Punkt-Ovalität, die gut mit drei um jeweils 60 Grad zueinander gedrehten Messkanälen erfasst werden kann.

Bei einer vorteilhaften Weiterbildung der Erfindung ist wenigstens ein Lichtschnittsensor zusätzlich an dem Manipulator angeordnet, wobei die Oberfläche einer bevorzugt hinterschnittenen Gewindeflanke mittels des Lichtschnittsensors messbar ist. Dies erlaubt auf einfache Weise die Detektierung von Oberflächenfehlern, wie Sie zum Beispiel durch einen Werkzeugbruch beim Gewindeschneiden entstehen können. Zumindest in hinterschnittenen Bereichen sind solche Fehler für die optischen Messstrecken unsichtbar, so dass eine verbesserte Messung mit einfachen Mitteln erreicht wird. Bevorzugt ist dabei der Lichtschnittsensor in gleicher Aufnahme mit dem Messkanal an dem Manipulator angeordnet, so dass eine Ausrichtung des Messkanals auch eine Ausrichtung des Lichtschnittsensors bedeutet.

In besonders bevorzugter Weiterbildung ist zudem wenigstens ein zweiter Lichtschnittsensor an dem Manipulator angeordnet, wobei mittels des zweiten Lichtschnittsensors eine gegenüberliegende Flanke des Gewindegangs messbar ist. Dies erlaubt die Kontrolle beider Flanken eines Gewindeganges mit hoher Geschwindigkeit.

Bevorzugt umfasst zumindest eine der optischen Messstrecken ein optisches Messinstrument, ausgewählt aus der Gruppe telezentrische Optik, Laserscanner und Lasertriangulator oder LCD Lichtbandscanner (µ-meter). Ein Laserscanner im vorliegenden Sinn wird auch als Laser Micrometer oder Laser Scan Micrometer bezeichnet. Eine telezentrische Optik im Sinne der Erfindung ist eine abbildende Optik, die im Bereich des abzubildenden Objektes einen im Wesentlichen parallelen Strahlengang aufweist, so dass eine verzerrungsarme Abbildung und Vermessung des Objektes ermöglicht ist.

Allgemein vorteilhaft wird bei einer erfindungsgemäßen Vorrichtung das Rohr während der gesamten Messung nicht bewegt. Somit werden keine weiteren Abweichungen in der Positionierung des Gewindes relativ zu dem Messkanal eingeführt. Eine Bewegung im Zuge der Vermessung erfolgt dann ausschließlich mittels des bewegbaren Messkanals.

Im Interesse eines schnellen und störungsfreien Ablaufs sowie geringen Wartungsaufwands der Vorrichtung ist es bevorzugt vorgesehen, dass die Messung des Gewindes vollständig ohne einen mechanischen Kontakt eines Messfühlers erfolgt. Weitere Vorteile und Merkmale ergeben sich aus den nachfolgend beschriebenen Ausführungsbeispielen sowie aus den abhängigen Ansprüchen.

Nachfolgend werden bevorzugte Ausführungsbeispiele der Erfindung beschrieben und anhand der anliegenden Zeichnungen näher erläutert.
Fig. 1 zeigt eine schematische Gesamtansicht eines ersten Ausführungsbeispiels einer erfindungsgemäßen Vorrichtung.
Fig. 2 zeigt eine seitliche Detailansicht der Vorrichtung aus Fig. 1.
Fig. 3 zeigt eine Darstellung einer optischen Messstrecke der Vorrichtung aus Fig. 1.
Fig. 4 zeigt eine Aufsicht auf einen Messkanal der Vorrichtung aus Fig. 1.
Fig. 5 zeigt eine Detailansicht eines zweiten Ausführungsbeispiels der Erfindung mit zwei Messkanälen.
Fig. 6 zeigt eine Skizze zur Erläuterung eines Ausrichtvorgangs mittels der Vorrichtung aus Fig. 1.
Fig. 7 zeigt eine Darstellung eines hinterschnittenen Gewindes.
Fig. 8 zeigt eine schematische Darstellung eines dritten Ausführungsbeispiels der Erfindung mit zwei Lichtschnittsensoren.

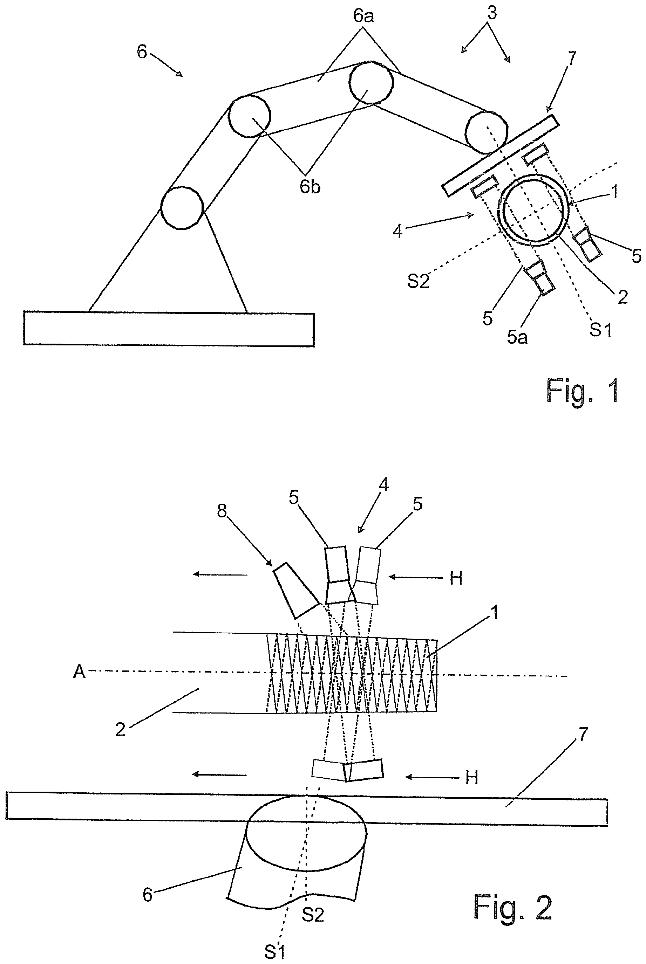

Die in Fig. 1 gezeigte Vorrichtung dient der Messung eines Gewindes 1, das in einem vorhergehenden Herstellungsschritt auf das Ende eines ein Rohres 2 aufgeschnitten wurde. Die Messung dient der Qualitätskontrolle. Je nach Anforderungen kann die Messung stichprobenartig erfolgen. Bevorzugt wird jedes hergestellte Gewinde mittels der Vorrichtung geprüft.

Das Rohr 2 wird während der Messung in einem raumfesten Halter (nicht dargestellt) festgehalten. Das Rohr erfährt während der Messung keine Bewegung oder Drehung.

Die erfindungsgemäße Vorrichtung umfasst einen Manipulator 3, mittels dessen ein Messkanal 4 mit zwei optischen Messstrecken 5 im Raum bewegbar ist. Der Manipulator 3 umfasst vorliegend beispielsweise einen universellen Industrieroboter 6. Ein Arm des Robotors umfasst mehrere Segmente 6a, die über Gelenke 6b zueinander schwenkbar sind. Am Ende des Arms ist ein Träger 7 als weiterer Teil des Manipulators angebracht, der den Messkanal 4 trägt.

Über eine Linearführung (nicht dargestellt) des Trägers 7 kann der Messkanal 4 mit hoher Genauigkeit linear entlang einer Hauptrichtung H hin- und hergefahren werden. In der Darstellung nach Fig. 1 verläuft die Hauptrichtung H senkrecht zu der Zeichnungsebene. Durch das Gewinde 1 wird eine Gewindeachse A als zentrale Symmetrieachse des Gewindes 1 definiert.

Der Träger 7 kann mittels des Industrieroboters 6 frei im Raum bewegt werden. Insbesondere umfasst dies nicht nur eine translatorische Bewegung, sondern auch eine freie Einstellung in einem Raumwinkelintervall. Auf diese Weise kann die Hauptrichtung H des Trägers auch bei innerhalb des Raumwinkelintervalls beliebig gerichtetem Schiefstand parallel zu der Gewindeachse A ausgerichtet werden.

Diese Ausrichtung kann bei Verwendung eines universellen Industrieroboters auch durch gleichzeitiges Verfahren mehrerer Segmente und Gelenke erfolgen. Zur schematischen Veranschaulichung der freien Einstellbarkeit der Richtung sind in Fig. 2 zwei Stellachsen S1, S2 gezeigt. Die Stellachsen S1 und S2 sowie die Gewindeachse A sollen jeweils nicht parallel zueinander sein. Bevorzugt stehen die drei Achsen im Wesentlichen senkrecht aufeinander.

Auf diese Weise kann die Hauptrichtung H bzw. eine Orientierung des Messkanals 4 in eine beliebige Richtung durch Verkippung um zwei Stellachsen S1, S2 gebracht werden. Im vorliegenden Sinne wird das Verkippen um zumindest zwei Stellachsen S1, S2 als äquivalent zu einer freien Richtungseinstellung (zwei Freiheitsgrade der Raumrichtung) des Messkanals 4 verstanden. Bezüglich der Realisierung der Verkippung kann an dem Manipulator eine beliebige Anzahl und Kombination von bewegten Gelenken, Führungen etc. vorgesehen sein, was durch den universellen Industrieroboter 6 veranschaulicht ist.

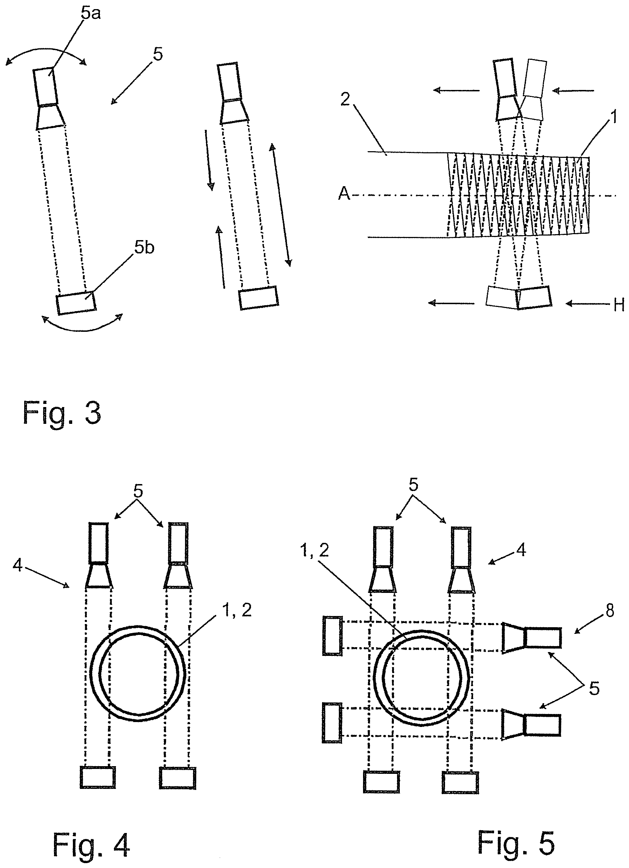

Fig. 3 veranschaulicht einige Möglichkeiten der Einstellung der optischen Messstrecken 5. Vorliegend handelt es sich bei den optischen Messstrecken 5 jeweils um eine telezentrische Optik, bei der ein objektseitig paralleler Strahlengang auf einen optischen Sensor 5a abgebildet wird.

Zunächst kann eine optische Achse der Messstrecke 5 um einen Winkel relativ zu dem Träger 7 und/oder relativ zu einer zweiten optischen Messstrecke desselben Messkanals 4 vorjustiert werden. Hierdurch kann zum Beispiel die Sollsteigung des aufgeschnittenen Gewindes eingestellt werden.

Zudem kann der Abstand zwischen dem optischen Sensor 5a und einer Lichtquelle 5b der optischen Messstrecke eingestellt werden. Ferner kann die Position der Messstrecke entlang ihrer optischen Achse eingestellt werden. Insgesamt kann hierdurch eine Anpassung an verschiedene Rohrdurchmesser und Rohrhalterungen erzielt werden. Ebenso wie die Vorjustage gemäß der Gewindesteigung können diese Einstellungen einmalig vor einer fortlaufenden Serienmessung produktionsgleicher Rohre erfolgen. Zweckmäßig sind hierzu einstellbare Halterungen (nicht dargestellt) auf dem Träger 7 angeordnet.

In der rechten Abbildung in Fig. 3 ist die Bewegung des Messkanals 4 durch verfahren des Trägers 7 entlang der Hauptrichtung H angedeutet.

Fig. 4 zeigt eine schematische Ansicht des über dem Gewinde 1 ausgerichteten Messkanals 4 gemäß dem ersten Ausführungsbeispiel der Erfindung.

Fig. 5 zeigt ein zweites Ausführungsbeispiel der Erfindung, bei dem ein zweiter Messkanal 8 auf dem Träger 7 angeordnet ist. Der zweite Messkanal 8 ist bei sonst gleichem Aufbau gegenüber dem ersten Messkanal 4 um 90° um die Hauptrichtung H verdreht angeordnet. Hierdurch können verschiedene Bereiche entlang des Umfangs des Gewindes 1 vermessen werden. Zudem können auf diese Weise Informationen über eine Ovalität des Rohres 2 bzw. des Gewindes 1 gewonnen werden, ohne dass das Rohr 2 in seiner Halterung gedreht werden muss. Aus baulichen Gründen kann der zweite Messkanal 8 in der Hauptrichtung H in einer anderen Ebene als der erste Messkanal angeordnet sein.

Bei weiteren Ausführungsbeispielen (nicht dargestellt) können auch drei oder mehr Messkanäle 4 vorgesehen sein, die um einen entsprechenden Winkel, etwa 60° im Fall von drei Messkanälen, zueinander verdreht sein können.

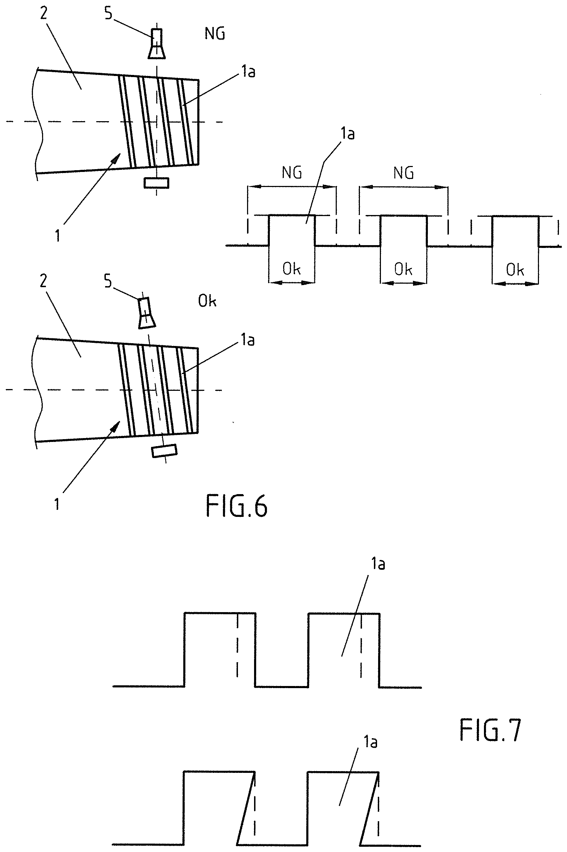

Fig. 6 veranschaulicht den Vorgang der Ausrichtung des Messkanals 4 bzw. der Hauptrichtung H relativ zu der Gewindeachse A.

Bei einem Schiefstand bzw. einem bestehenden Winkel zwischen den Geraden A und H (Fall NG in der Skizze) sind die Projektionen eines Gewindegangs 1a entlang der optischen Achse der Messstrecken 5 abgeschattet. Ein mit dem optischen Sensor gemessenes Profil des Gewindeganges entspricht dem gestrichelt eingezeichneten Verlauf NG. Die scheinbare Breite des Gewindeganges ist vergrößert, die Breite des freien Lichtdurchtritts ist verringert.

Bei optimaler Ausrichtung der Hauptrichtung H parallel zu der Gewindeachse A ist die Profilbreite des Gewindegangs minimal und die Breite des freien Lichtdurchtritts maximal. Der ausgerichtete Zustand wird erreicht, indem die Kippung um beide Stellachsen S1, S2 vorgenommen wird, bis das gemessene Profil entsprechende Extremalwerte aufweist.

Fig. 7 zeigt ein schematisches Profil eines einseitig hinterschnittenen Gewindeganges. Die hinterschnittene Gewindeflanke ist gestrichelt dargestellt und kann rein geometrisch nur unzureichend von den optischen Messstrecken erfasst werden.

Ein erster Lichtschnittsensor 9 ist gemäß dem ersten Ausführungsbeispiel (siehe Fig. 2) zusätzlich zu dem Messkanal 4 auf dem Träger 7 angeordnet und unter einem geometrisch geeigneten Winkel auf die hinterschnittene Gewindeflanke gerichtet. Mittels des Lichtschnittsensors kann ein Verlauf der Oberfläche der Gewindeflanke als Querschnitt abgebildet vermessen werden. Hierdurch kann zum Beispiel detektiert werden, ob ein Werkzeugbruch während der Gewindeherstellung zu einer deformierten Oberfläche geführt hat.

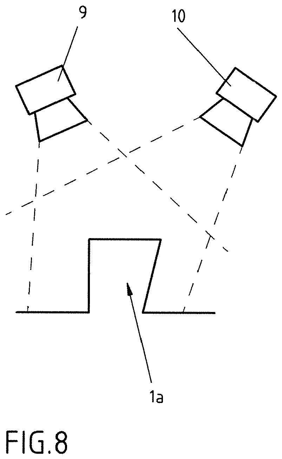

Bei dem in Fig. 8 skizzierten dritten Ausführungsbeispiel ist zusätzlich zu dem ersten Lichtschnittsensor 9 ein zweiter Lichtschnittsensor 10 vorgesehen, der auf die gegenüberliegende Gewindeflanke gerichtet ist. Hierdurch können die Oberflächen beider Gewindeflanken schnell und zuverlässig überprüft werden. Der Messkanal 4 ist in Fig. 8 nicht dargestellt.

Es versteht sich, dass die spezifischen Merkmale der einzelnen Ausführungsbeispiele je nach Anforderungen sinnvoll miteinander kombiniert werden können, solange diese Kombinationen unter den unabhängigen Anspruch 1 fallen.

Die Erfindung funktioniert nun wie folgt:
Zunächst werden die optischen Messstrecken 5 gemäß der Sollmaße und Sollgeometrie des Rohres 2 und des Gewindes 1 auf dem Träger 7 justiert. Der Manipulator 3 wird in eine Grundposition gefahren.

Nachfolgend wird ein produziertes Rohr in den Halter übergeben und fixiert. Der Industrieroboter 6 fährt dann den Träger 7 mit dem Messkanal 4 in eine Überdeckung über das Gewinde 1 rohreinwärts (linke Richtung in der Darstellung Fig. 2). Im Zuge dieses Verfahrens werden Kippungen um die Stellachsen S1, S2 vorgenommen und zugleich die von den telezentrischen Optiken 5 aufgenommenen Bilder des Gewindeganges vermessen. Der Träger 7 wird dabei so im Raum ausgerichtet, dass ein Extremum einer optischen Breite des Gewindegangs eingestellt wird (siehe auch vorhergehende Erläuterung zu Fig. 6). Hierdurch sind die Gewindeachse A und die Hauptrichtung H des Trägers im Sinne der Messung parallel zueinander ausgerichtet.

Nachfolgend wird der Industrieroboter 6 angehalten und nur der Träger 7 wird über seine Linearführung verfahren. Hierbei wird die Vermessung des Gewindes vorgenommen. Bei der Messung kommt die Anordnung von einem oder mehreren Messkanälen 4, 8 und des ersten oder auch zweiten Lichtschnittsensors 9, 10 zum Einsatz. Zweckmäßig und im Interesse eines schnellen Gesamtablaufs erfolgt die Messung, während der Messkanal 4 wieder relativ zu dem Rohr 2 rohrauswärts verfahren wird (rechte Richtung in der Darstellung Fig. 2).

Gemäß dem bevorzugten Ausführungsbeispiel wird kein mechanischer Kontakt durch die Messapparatur zur Vermessung des Gewindes 1 vorgenommen. Eine Bewegung oder Drehung des Rohres 2 erfolgt während der gesamten Messung nicht.

### Bezugszeichenliste

- 1: zu vermessendes Gewinde
- 1a: Gewindegang
- 2: Rohr
- 3: Manipulator
- 4: Messkanal
- 5: optische Messtrecke
- 5a: optischer Sensor
- 5b: Beleuchtung
- 6: Industrieroboter
- 6a: Segmente des Industrieroboters
- 6b: Gelenke des Industrieroboters
- 7: Träger
- 8: zweiter Messkanal
- 9: erster Lichtschnittsensor
- 10: zweiter Lichtschnittsensor
- A: Gewindeachse
- S1: erste Stellachse
- S2: zweite Stellachse
- H: Hauptrichtung

## Patentansprüche

1. Vorrichtung zur Messung eines Gewindes (1), umfassend
einen Halter zur lösbaren Halterung eines Rohres (2), wobei das Gewinde (1) an einem Ende des Rohres (2) ausgeformt ist,
eine erste optische Messtrecke (5) mit einem ersten optischen Sensor (5a),
wobei die erste optische Messstrecke (5) an einem Manipulator (3) der Vorrichtung angebracht ist, der eingerichtet ist, die erste Messstrecke (5) relativ zu dem Rohr (2) zu bewegen, und wobei die erste optische Messstrecke (5) um eine erste Stellachse (S1) relativ zu einer Gewindeachse (A) des Gewindes (1) einstellbar kippbar ist,
wobei an dem Manipulator (3) eine zweite optische Messstrecke (5) der Vorrichtung mit einem zweiten optischen Sensor (5a) angeordnet ist, wobei die optischen Messstrecken (5) insgesamt einen Messkanal (4) zur gleichzeitigen Vermessung von gegenüberliegenden Seiten des Gewindes (1) ausbilden,
**dadurch gekennzeichnet,**
**dass** der Messkanal (4) mittels des Manipulators (3) um zumindest eine zweite Stellachse (S2) relativ zu der Gewindeachse (A) kippbar ist, so dass der Messkanal (4) innerhalb eines Raumwinkelintervalls frei ausrichtbar ist.

2. Vorrichtung nach Anspruch 1, **dadurch gekennzeichnet, dass** eine Ausrichtung des Messkanals (4) zur Messung des Gewindes (1) dadurch erfolgt, dass durch die Kippungen um die Stellachsen (S1, S2) ein Extremum einer optischen Breite eines Gewindeganges (1a) eingestellt wird.

3. Vorrichtung nach Anspruch 1 oder 2, **dadurch gekennzeichnet, dass** der Messkanal (4) auf einem um die Stellachsen (S1, S2) bewegbaren Träger (7) angeordnet ist, wobei der Träger (7) über eine Linearführung entlang einer Hauptrichtung (H) verfahrbar ist.

4. Vorrichtung nach einem der Ansprüche 1 bis 3, **dadurch gekennzeichnet, dass** der Messkanal (4) in einem ersten Schritt mittels des Manipulators (3) in eine Überdeckung mit dem Gewinde (1) verfahren wird, wobei eine Ausrichtung des Messkanals (4) zu der Gewindeachse (A) erfolgt, und dass der Messkanal (4) in einem zweiten Schritt in Gegenrichtung aus der Überdeckung herausgefahren wird, wobei eine Vermessung des Gewindes (1) erfolgt.

5. Vorrichtung nach einem der vorhergehenden Ansprüche, **dadurch gekennzeichnet, dass** der Manipulator (3) einen frei bewegbaren Industrieroboter (6) oder vergleichbarer Roboter umfasst.

6. Vorrichtung nach einem der vorhergehenden Ansprüche, **dadurch gekennzeichnet, dass** wenigstens ein zweiter Messkanal (8) an dem Manipulator (3) angeordnet ist, wobei die Messkanäle (4, 8) auf verschiedene Bereiche des Gewindes (1) in seiner Umfangsrichtung ausgerichtet sind.

7. Vorrichtung nach einem der vorhergehenden Ansprüche, **dadurch gekennzeichnet, dass** wenigstens ein Lichtschnittsensor (9) zusätzlich an dem Manipulator angeordnet ist, wobei die Oberfläche einer insbesondere hinterschnittenen Gewindeflanke (1a) mittels des Lichtschnittsensors (9) messbar ist.

8. Vorrichtung nach Anspruch 7, **dadurch gekennzeichnet, dass** wenigstens ein zweiter Lichtschnittsensor (10) an dem Manipulator (3) angeordnet ist, wobei mittels des zweiten Lichtschnittsensors (10) eine gegenüberliegende Flanke des Gewindegangs (1a) messbar ist.

9. Vorrichtung nach einem der vorhergehenden Ansprüche, **dadurch gekennzeichnet, dass** eine der optischen Messstrecken (5) ein optisches Messinstrument umfasst, ausgewählt aus der Gruppe telezentrische Optik, Laserscanner und Lasertriangulator oder LED Lichtbandscanner (µ-meter).

10. Vorrichtung nach einem der vorhergehenden Ansprüche, **dadurch gekennzeichnet, dass** das Rohr (2) während der gesamten Messung nicht bewegt wird.

11. Vorrichtung nach einem der vorhergehenden Ansprüche, **dadurch gekennzeichnet, dass** die Messung des Gewindes (1) vollständig ohne einen mechanischen Kontakt eines Messfühlers erfolgt.

## Claims

1. Device for measuring a thread (1), comprising
a holder for releasable holding of a tube (2), wherein the thread (1) is formed at one end of the tube (2),
a first optical measuring path (5) with a first optical sensor (5a),
wherein the first optical measuring path (5) is arranged at a manipulator (3) of the device, the manipulator being adapted to move the first measuring path (5) relative to the tube (2), and wherein the first optical measuring path (5) is settably tiltable about a first setting axis (S1) relative to a thread axis (A) of the thread (1), wherein a second optical measuring path (5) of the device with a second optical sensor (5a) is arranged at the manipulator (3), wherein the optical measuring paths (5) together form a measuring channel (4) for simultaneous measurement on opposite sides of the thread (1),
**characterised in that**
the measuring channel (4) is tiltable by means of the manipulator (3) about at least one second setting axis (S2) relative to the thread axis (A) to that the measuring channel (4) can be freely oriented within a solid angle interval.

2. Device according to claim 1, **characterised in that** an orientation of the measuring channel (4) for measurement of the thread (1) is carried out **in that** through the tiltings about the setting axes (S1, S2) an extreme of an optical width of a thread pitch (1a) is set.

3. Device according to claim 1 or 2, **characterised in that** the measuring channel (4) is arranged on a carrier (7) movable about the setting axes (S1, S2), wherein the carrier (7) is movable by way of a linear guide along a main direction (H).

4. Device according to any one of claims 1 to 3, **characterised in that** the measuring channel (4) is moved in a first step by means of the manipulator (3) into congruency with the thread (1), wherein orientation of the measuring channel (4) relative to the thread axis (A) takes place, and that the measuring channel (4) is moved in a second step in opposite direction out of the congruency, wherein measuring of the thread (1) takes place.

5. Device according to any one of the preceding claims, **characterised in that** the manipulator (3) comprises a freely movable industrial robot (6) or comparable robot.

6. Device according to any one of the preceding claims, **characterised in that** at least one second measuring channel (8) is arranged at the manipulator (3), wherein the measuring channels (4, 8) are oriented towards different regions of the thread (1) in its circumferential direction.

7. Device according to any one of the preceding claims, **characterised in that** at least one light section sensor (9) is additionally arranged at the manipulator, wherein the surface of a thread flank (1a), particularly undercut thread flank, can be measured by means of the light section sensor (9).

8. Device according to claim 7, **characterised in that** at least one second light section sensor (10) is arranged at the manipulator (3), wherein an opposite flank of the thread pitch (a) can be measured by means of the second light section sensor (10).

9. Device according to any one of the preceding claims, **characterised in that** one of the optical measuring paths (5) comprises an optical measuring instrument selected from the group of a telecentric optical system, laser scanner and laser triangulator or LED light band scanner (µ meter).

10. Device according to any one of the preceding claims, **characterised in that** the tube (2) is not moved during the entire measurement.

11. Device according to any one of the preceding claims, **characterised in that** the measurement of the thread (1) is carried out completely without mechanical contact of a measuring feeler.

## Revendications

1. Dispositif pour la mesure d'un filet de vis (1), comprenant :
un dispositif de retenue pour la fixation amovible d'un tube (2) dans lequel le filet de vis (1) est formé à une extrémité du tube (2) ;
un premier tronçon de mesure optique (5) comprenant un premier capteur optique (5a) ;
dans lequel le premier tronçon de mesure optique (5) est appliqué contre un dispositif de manipulation (3) du dispositif, qui est conçu pour déplacer le premier tronçon de mesure (5) par rapport au tube (2) ; et dans lequel le premier tronçon de mesure optique (5) peut basculer autour d'un premier axe de réglage (S1) par rapport à un axe de filet de vis (A) du filet de vis (1) ;
dans lequel est disposé contre le dispositif de manipulation (3) un deuxième tronçon de mesure optique (5) du dispositif comprenant un deuxième capteur optique (5a) ; dans lequel les tronçons de mesure optique (5) forment ensemble un canal de mesure (4) pour la mesure simultanée de côtés opposés du filet de vis (1) ;
**caractérisé en ce que** le canal de mesure (4) peut basculer, au moyen du dispositif de manipulation (3), autour d'au moins un deuxième axe de réglage (S2) par rapport à l'axe de filet de vis (A), d'une manière telle que le canal de mesure (4) peut être orienté librement au sein d'un intervalle d'angle solide.

2. Dispositif selon la revendication 1, **caractérisé en ce qu'**une orientation du canal de mesure (4) pour la mesure du filet de vis (1) a lieu par le fait que l'on règle, par l'intermédiaire des basculements autour des axes de réglage (S1, S2), une valeur extrême d'une largeur optique d'un pas de filet de vis (1a).

3. Dispositif selon la revendication 1 ou 2, **caractérisé en ce que** le canal de mesure (4) est disposé sur un support (7) mobile autour des axes de réglage (S1, S2) ; dans lequel le support (7) peut se déplacer via un guidage linéaire le long d'une direction principale (H).

4. Dispositif selon l'une quelconque des revendications 1 à 3, **caractérisé en ce que** le canal de mesure (4) est déplacé, dans une première étape, au moyen du dispositif de manipulation (3) pour venir se superposer au filet de vis (1) ; dans lequel une orientation du canal de mesure (4) a lieu par rapport à l'axe (A) du filet de vis ; et **en ce que** le canal de mesure (4) quitte, dans une seconde étape, la superposition, dans le sens inverse ; dans lequel a lieu une mesure du filet de vis (1).

5. Dispositif selon l'une quelconque des revendications précédentes, **caractérisé en ce que** le dispositif de manipulation (3) comprend un robot industriel (6) apte à se déplacer librement ou des robots comparables.

6. Dispositif selon l'une quelconque des revendications précédentes, **caractérisé en ce qu'**au moins un second canal de mesure (8) est disposé contre le dispositif de manipulation (3) ; dans lequel les canaux de mesure (4, 8) sont orientés sur différentes zones du filet de vis (1) dans la direction périphérique de ce dernier.

7. Dispositif selon l'une quelconque des revendications précédentes, **caractérisé en ce qu'**au moins un dispositif à coupe optique (9) est disposé en outre contre le dispositif de manipulation ; dans lequel la surface d'un flanc de filet (1a), en particulier en contre-dépouille, peut être mesurée au moyen du dispositif à coupe optique (9).

8. Dispositif selon la revendication 7, **caractérisé en ce qu'**au moins un deuxième dispositif à coupe optique (10) est disposé contre le dispositif de manipulation (3) ; dans lequel un flanc de filet opposé du pas de filet de vis (1a) peut être mesuré au moyen du deuxième dispositif à coupe optique (10).

9. Dispositif selon l'une quelconque des revendications précédentes, **caractérisé en ce qu'**un des tronçons de mesure optique (5) comprend un instrument de mesure choisi parmi le groupe comprenant une optique télécentrique, un dispositif de balayage par rayon laser et un dispositif de mesure de triangulation par laser ou un scanner à bande de lumière LED (micromètre).

10. Dispositif selon l'une quelconque des revendications précédentes, **caractérisé en ce que** le tube (2) reste immobile au cours de la totalité de la mesure.

11. Dispositif selon l'une quelconque des revendications précédentes, **caractérisé en ce que** la mesure du filet de vis (1) a lieu de manière complètement l'absence de contact mécanique avec une sonde de mesure.
